# EUROPEAN PATENT SPECIFICATION

(11) **EP 0 811 822 B1**
(45) Date of publication and mention of the grant of the patent: **07.01.2004**
(21) Application number: 96304319.5
(22) Date of filing: 07.06.1996
(51) Int. Cl.: F42B 10/18, B64C 3/56

(54) **Extendable wing assembly**
Ausfaltbares Flügelelement
Aile dépliante

(43) Date of publication of application: 10.12.1997
(73) Proprietor: Alenia Marconi Systems Incorporated, Westlake Village, CA 91362 (US)
(72) Inventor: Shmoldas, John, Dusan, Thousand Oakes, California 91360 (US); Barlow, Christopher William, Newbury Park, California 91320 (US); Hutchings, Michael Bruce, Newbury Park, California 91320 (US)
(74) Representative: Jewess, Michael

(56) References cited:
- EP-A- 0 251 890
- FR-A- 1 563 898
- GB-A- 1 597 098
- US-A- 1 998 148
- US-A- 4 586 681
- US-A- 4 923 143
- US-A- 5 141 175
- ONIONS C.T.: 'The Shorter Oxford Dictionary', 1991, CLARENDON PRESS, OXFORD * page 2554 *
- PARKER S.: 'Mcgraw-Hill Concise Encyclopedia of Science and Technology, pages 36, 37, 48, 49, 2024, 2025', 1989, MCGRAW-HILL COMPANY, NEW YORK

## Description

The present invention relates to wings for a guided projectile, or a guided airborne body such as a bomb, dispenser, munition or missile. It particularly relates to extendible wings and the power deployment mechanism thereof whereby for carriage or dense packing considerations the wings are folded but for flight the wings are extended by the action of a power element.

Proposals have been made to add airfoil surfaces to munitions or missiles to provide control and extended range capability. Prior art proposals include multiple pop out flight surfaces, an extendible pair of wings, or joined wings comprising front and rear spars with flexible coverings to join the spars forming a single aerodynamic surface. Another proposal is joined wings for aircraft that provide flexible and foldable surfaces with a control mechanism. In the above joined wing concepts, the root attachment points are stationary hinge points and strength is achieved through joining the wings and elevating the root of the rear wing providing compression of the upper (rear) wing under load. These prior art proposals have a number of disadvantages, being either fragile, producing insufficient lift for heavy weapons, expensive if they contained control mechanisms, or could not be extended into a flight configuration after launch from an aircraft or ground launch mechanism such as a tube. United States Patent US 3,942,747, (Wolkovick) discusses the advantages of using a joined wing configuration for lightweight aircraft configurations. The extension mechanisms are manual and unpowered and the design is intended to provide torsional stiffness by offsetting the root attachments in the vertical plane as previously discussed. The flexible airfoil surfaces also provide a means for control through cables that will warp the wings to control lift, pitch and bank angle for a manned aircraft. This design requires that the joined wing tips be manually fastened together at the tips after extension from the storage configuration, an unacceptable process after launch from an aircraft or out of a tube. United States Patent US 4,923,143,(Steuer) describes a folding front and rear spar which uses a fabric covering to form a single wing. The power element is attached to a slider which pushes against both spars to effect extension. United States Patent US 4,858,851 describes a spring-deployed telescoping set of fabric covered spars which forms a single lifting surface. In both the preceding patents, the generated wing is fragile, inefficient, and unable to achieve high lift over drag ratios. United States Patent US 5,141,175, (Harris) describes a spring powered extendible scissor wing using downwash control to control pitch and bank angle. The Harris scissor wing has a large structure to accommodate in the folded position. The control element is expensive and unnecessarily redundant to munitions and missiles that already have guidance and control mechanisms.

United Kingdom Patent GB A 1597098 which is a base for the preamble of claim 1, discloses an arrangement in which each wing or fin consists of two discrete portions which are hinged together at what is the wing tip in the deployed position. In one arrangement two wing portions are arranged in line with the missile axis in the stowed position and are moved to the deployed position after launch by a hydraulic jack or spring which rotates the rear wing portion to its deployed position, pulling the forward wing portion into its deployed position as it does. The leading edge of the rear wing portion nests within a recess in the forward portion so that the two portions form a single wing.

This document also discloses another arrangement in which fins have corresponding stowed and deployed configurations but are arranged to be deployed before the missile leaves its launch chamber. The in-board ends of the rearward fin portions are coupled to a common carriage which surrounds the missile motor's exhaust pipe and constitutes the nozzle of the motor. Exhaust gases from the missile motor are constrained by a deflector plate in the missile launch chamber and urge the carriage along the pipe, causing the fin portions to emerge through covered cut outs in the walls of the launch chamber to assume a deployed position in which each rearward portion cooperates with a respective forward portion to form respective single fins. Magnetic rings lock the carriage (and thus the fins) in position when the fins are fully extended.

In accordance with the invention, an extendable wing assembly for a guided munition comprises:
a housing; a rear wing (22); a forward wing (24) pivotably coupled to the rear wing (22) at an outer end thereof, an inner end of one (24) of the forward and rear wings (22, 24) being pivotably coupled to the housing; a carriage assembly (26) arranged to be movable along an axis of the housing, an inner end of the other wing (22) being pivotably coupled to the carriage assembly (26), movement of the carriage assembly (26) along the axis causing the wings (22, 24) to move between a first position in which the wings (22, 24) are stowed and a second position in which the wings are deployed; characterised in that the rear wing (22) lies on top of the forward wing (24) in the first position and in that the wings (22,24) are arranged to move pivotally forward between the first position and the second position in response to movement of the carriage assembly (26) along said axis.

An advantage of the invention is that it derives lift from a diamond planform where the rear wing acts in conjunction with the power source to extend, preferably after launch, an aerodynamically balanced, high lift to drag ratio front and rear wing joined close to the wingtips to form a diamond configuration without an integrated guidance and control system. This system provides a compact low cost range extension kit compatible with a large inventory of guided munitions and missiles. Advantageously, the folded wings and deployment mechanism are contained in a small cross sectional and longitudinal area providing minimum interference with host aircraft structure and low aerodynamic drag for carriage on a large variety of aircraft and weapon stations. Extension of the wing maybe accomplished by powering the rear wing root to the rear causing the joined wings to rotate to the extended position. The high efficiency and strength of the deployed wings can provide long range and weapon manouverability. The simplicity of the kit using existing and standard suspension points provide for low cost installation and cost of ownership.

Embodiments of the invention will now be described by way of non-limiting example only, with reference to the drawings, in which
Figure 1 (a), (b) and (c) show successive stages in the deployment of an extendible wing kit in accordance with the invention assembled to a weapon;
Figure 2 shows a plan view of the wing kit of Figure 1 in the folded state;
Figure 3 shows a plan view of the wing kit of Figure 1 in its deployed state;
Figure 4 shows a sectional view of Figure 3 along IV-IV;
Figure 5 shows a sectional view of Figure 4 along V-V.

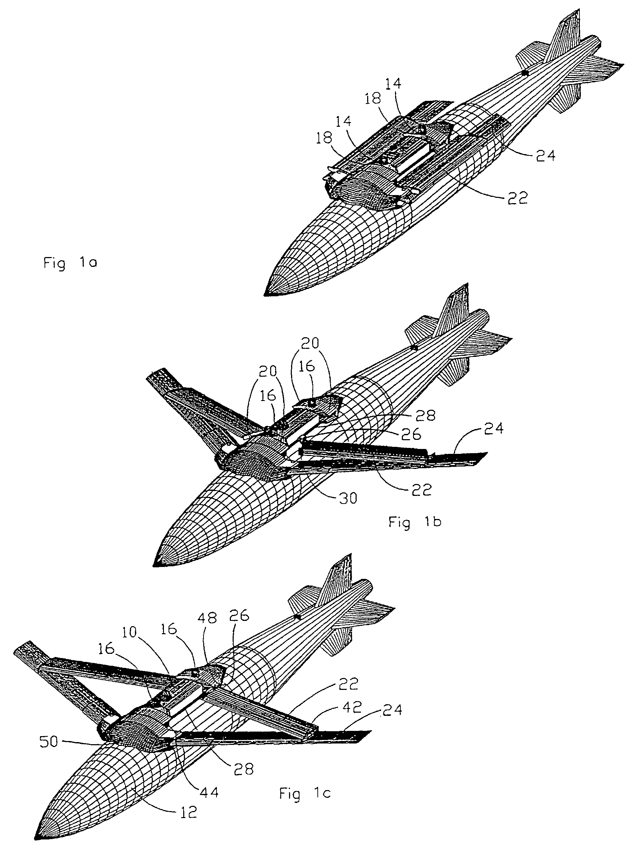

Referring now to figure 1, a munition **12** has a wing kit secured to an upper surface thereof. In the folded position (Fig 1a), the rear wing **22** lies on top of the forward wing **24** and stows closely to the side of a hardback **10** at about the same vertical level as the upper surface of the munition **12** and with a movable carriage **26** supporting the rear wing **22** at the most forward position of travel. To deploy the joined wings, **22** and **24,** the carriages **26** are moved aft on and by the action of a pair of driveshafts **28**. The rearward movement of the carriages **26**, each attached to a rear wing root casting **30**, and the relative geometry of the joined wing surfaces, forces the forward wing **24** to pivot out, thereby forming a triangular (diamond) planform, (Fig 1b). The deployment is complete when the rear wing **22** passes 90 degrees of rotation. With less than 90 degrees of rotation the wings, **22** and **24**, rely upon the said driveshafts **28** to maintain deployment. Above 90 degrees the planform locks into position (Fig 1c) under the action of the overall drag force produced by the movement of the munition through the air, and requires a positive action to restow the wings.

In the fully folded position (Fig 1a) the wing panels lie on either side of the hardback **10** with the rear wing **22** laying on top of the forward wing **24**. The streamlined hardback **10** bolts to the guided missile or munition **12** by way of standard munition lug wells **14**, these generally being but not limited to, either 14 inch (355.6mm) or 30 inch (762mm) spacing depending upon the weight class of the munition **12**. The hardback **10** includes an additional set of hardback lugs **16** and hardback lug pockets **18**, mounted above the existing munition lug wells **14** for attachment to the munition **12** and the parent aircraft. The existing munition lug positions **(14)** as fitted with new hardback lugs **16a, 16b,** with the adjacent swaybrace pads **20,** can be seen from the top of the hardback **10**. Four swaybrace pads **20** are machined on the hardback **10** adjacent to the hardback lugs **16** to react to the release unit swaybrace loads. The hardback **10** design is such that the additional height of the final lug position above the munition **12** upper surface is as small as possible.

Figure 1a represents the carriage configuration where the munition **12** and wing kit would be attached by the new hardback lugs **16a, 16b** to the ejector release unit (not shown) mounted in a pylon of the carrier aircraft. After release of the munition **12** from the aircraft, the folded configuration is maintained for a period of time calculated to ensure safe clearance of the munition from the vicinity of the launch platform. After this delay measured by a simple onboard timer (not shown) power is applied to the deployment mechanism and the said carriages **26** starts to move aft on the driveshafts **28.** This state is shown in Fig 1b. Because of the relative spans of the two wing components, the geometry forces the forward wing **24** to rotate outwards and the rear wing **22** follows as shown. Fig 1c shows the deployment complete with the carriage **26** moved to the furthest aft position, the rear wing **22** having rotated by more than 90 degrees to ensure positive location in a diamond configuration.

The design is such that the aerodynamic Centre is well aft in the folded configuration to provide a stable carriage and launch vehicle. As the deployment progresses, the aerodynamic Centre moves forward until the rear wing **22** reaches approximately 90 degrees of rotation (Fig 1b). As the rotation continues the sweep angle of the forward wing **24** starts to reduce and the aerodynamic Centre begins to move aft. The geometry is designed to provide the optimum static margin of the combined guided munition or missile **12** and fully deployed wing kit without entering any unstable configurations during the deployment process, thus remaining within the control authority of the munition guidance system.

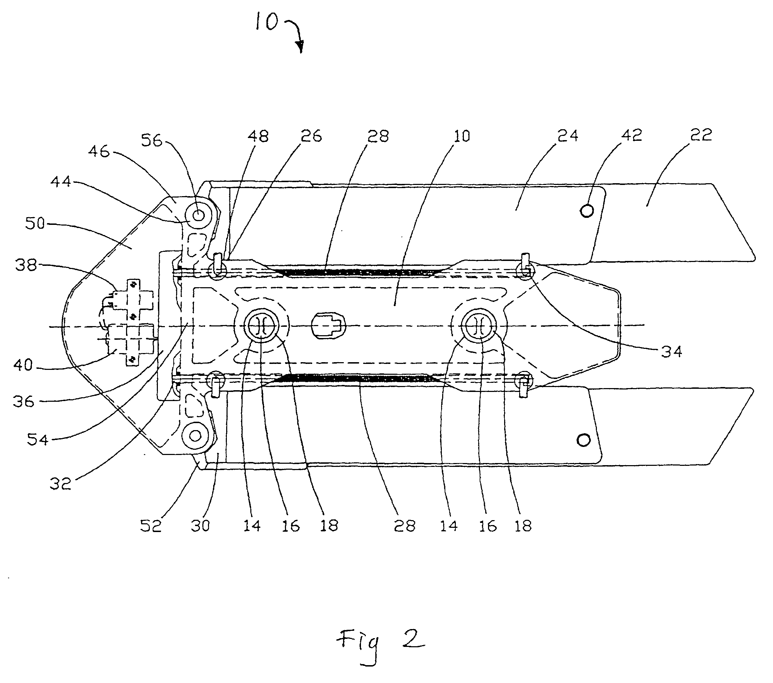

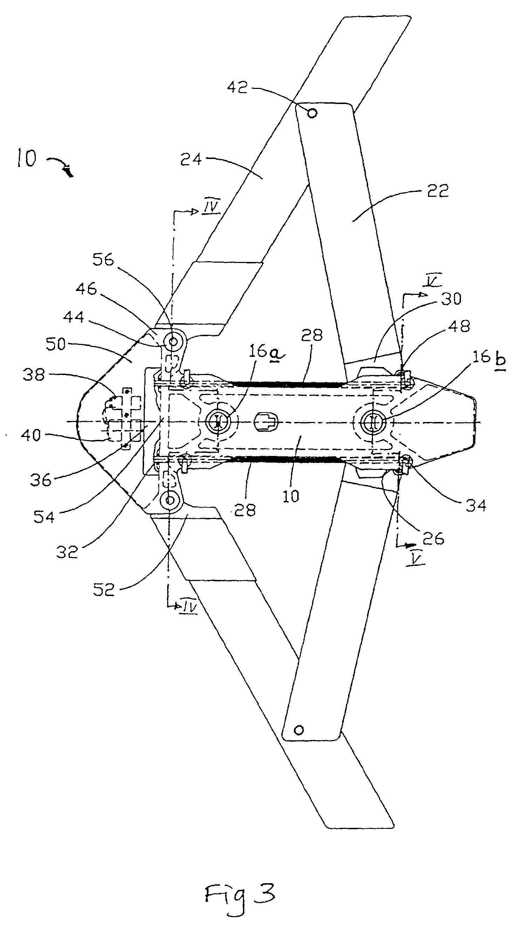

Figs 2 and 3 show a more detailed view of the wing kit. The forward wing **24** section comprises a hardback forward wing pivot **44**, shaped to fit between the said two machined ears **46** on the hardback. Both top and bottom machined ears **46** are shaped to accept the pair of thrust bearings **56** which allows the forward wing **24** to rotate in the horizontal plane located by the forward wing pivot **44**. Attached outboard of the hardback **10** is forward wing **24**.

The rear wing **22** section similarly comprises a rear wing root casting **30** which attaches to rear wing pivot **48** mounted on carriage **26** attached to driveshafts **28**. The rear wing pivot **48** is located to the rear to ensure that said rear wing **22** rotation during extension can proceed freely. The rear wing **22** is attached to the root casting in a similar manner to the said forward wing **24**. The end plate of the rear wing is machined to accept a rear wing pivot **48** which joins each pair of forward wings **24** and rear wings **22** outboard of the midpoint of forward wing **24**.

The hardback **10** comprises a casting streamlined at the front end to minimize the increased drag. This streamlined structure is hollow and contains power source **38** and motor **40** connected by gear trains **36** to driveshafts **28** mounted on each side of hardback **10**. Behind the hardback front streamlined structure **50**, main cross beam **54** supports machined ears **46** which hold thrust bearings **56** and hardback forward wing pivots **44** and forms the main load path to react the forward wing **24** root bending moment. This main cross beam **54** also provides the forward support for the driveshafts **28**. Behind, and attached to, the main cross beam **54** is the hardback casting **10** formed around the munition upper surface and containing internal structure at the hardback lug pockets **18** to attach the guided munition or missile **12**, to the hardback **10**, by means of the hardback lugs **16**, to the carrier aircraft. Aft of the rear hardback lug pockets **18**, the hardback **10** terminates with a tapering streamlined closure which also acts as a rear support for the said driveshafts **28**.

The hardback **10** is shaped to provide a forward driveshaft support **32** and a rear driveshaft support **34** for the two said driveshafts **28** mounted on each side. The driveshafts are driven by gear trains **36** from a centrally mounted power source **38** and a motor **40** to ensure symmetrical operation and deployment of the forward wing **24** and rear wing **22** surfaces.

The final deployed diamond wing planform is achieved with two wing surfaces linked with a wing tip pivot pin **42**. The forward wing **24**, forming the leading edge of the planform, rotates on a hardback forward wing pivot **44** between machined ears **46** on the front section of the hardback, the hardback forward wing pivot **44** being supported by roller bearings in each machined ear **46**. The rear wing **22** pivots freely about the forward wing **24** attached to said forward wing **24** by said wing tip pivot pin **42** at about 75% of span, and is supported at the inboard end by rear wing root casting **30** attached through a rear wing pivot **48** attached to carriage **26** running on driveshaft **28**.

As with most deployable wing systems, one of the major design drives is the reaction of the root bending moment from the wing lift, without a continuous main spar. With the present design, the forward wing **24** is mounted to a forward wing root structure **52**, which pivots on a wide thrust bearing **56** attached to the main cross beam **54**. The assembly is streamlined by a hardback cover **50**. This combined structure provides a satisfactory load path to limit the induced stresses. The forward wing pivot **44** and wing tip pivot pin **42** provide mutual stabilization and torsional stiffness for both wings, **22** and **24**, any wing twist being reacted by bending in the other wing. This design allows a simple, easily produced extrusion without the complexity of one or more internal shear webs.

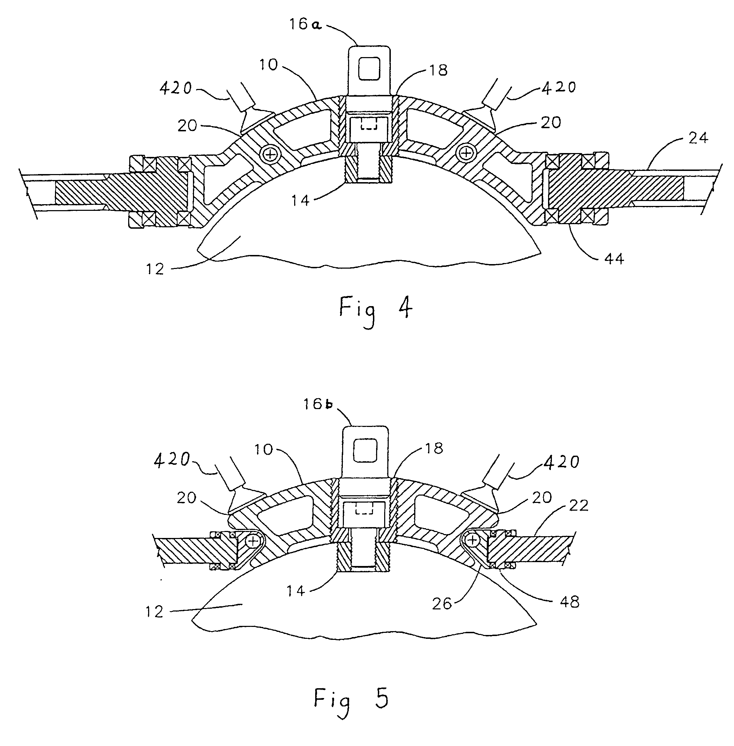

Fig 4 and 5 show more details of the wing attachment at both the front (fig 4) and rear (fig 5) attachment stations and the hardback **10** cross section with the internal structure necessary for attachment with the hardback lugs **16a**, **16b** and the reaction of the swaybrace pads **20** with the swaybraces **420.**

The position of the forward wing **24** attachment points is a compromise between ensuring a compact stowed configuration of the forward wing **24** and said rear wing **22** sections with minimal lateral extension beyond the munition body diameter and minimizing the installed height of the hardback **10** above the guided munition or missile **12** top surface. The embodiment shown only extends a minor amount above the original lug position, thereby reducing drag and interference with the carriage aircraft and other stores compared with other art.

The compactness of the design reduces the undeployed physical envelope, and limits installed drag increments. During the initial stages of deployment the forward wing **24** moves rapidly outboard as the roots of rear wings **22** are driven aft by the movement of carriage **26**. At this point, the drag loads are low and assist the motion of the rear wing **22**. As rear wings **22** are driven further, the geometry slows the rate of deployment of the forward wings **24**. As the wings **22**, **24**, become fully deployed, the increased mechanical advantage of the driveshafts **28** offsets the increase in drag force. Thus, full deployment is realized with the most favourable geometry. This design offers a balanced deployment mechanism that considerably reduces the risk associated with traditional systems. The symmetry and deployment scheme of the planform retains the Centre of pressure from the wing lift aft of the Centre of gravity at all times to ensure that the vehicle remains stable during wing extension and freeflight. Wing retraction is achieved by reversing the process.

The diamond wing design provides a number of important aerodynamic characteristics. The wing offers light weight and high torsional stiffness coupled with a high trimmed maximum lift coefficient and benign stall characteristics. The combination of swept forward and swept aft wings joined towards the outer edge induces an energetic inward flow along the upper surface of the rear wings **22** which will scour the tip region, re-energize the boundary layer, and delay the typical tip stall. Separation will spread slowly from the root producing a smooth flat topped lift curve with an increase in the linear range of C_{L} (lift coefficient) and a higher C_{L MAX} (maximum lift coefficient).

Preferably each airfoil of the wing is designed to operate in the curved flowfield generated by lift on the adjacent airfoil. Of necessity this implies differences between said forward wing **24** and said rear wing **22** sections.

Accordingly it can be seen that the invention can provide a significant increase in cost effectiveness for inventory and developmental weapons by providing a significant increase in range and manouverability by the addition of a simple wing kit in accordance with the invention that utilizes existing standard weapons suspension points and installed munition or missile guidance and control systems. Applications of the invention include, but are not limited to, use on inertially aided free fall weapons, rocket boosted, rocket sustained, turbine powered, propeller driven guided missiles or unmanned vehicles both air or surface launched. The compact profile of the installed retracted diamond wing kit is compatible with standard stores suspension equipment and space availability with a large number of aircraft for both internal and external carriage. The relatively low cost of the system and ease of installation provide a highly cost effective upgrade to a variety of inventory and developmental guided weapons.

Many other modifications and variations are possible within the scope of the invention. For example, the wing mechanism need not be a discrete assembly attached to a conventional munition, but can be designed into the structure of a new missile. The wing need not always be used in the fully extended state, but may be fully or partially extended or retracted as appropriate to control lift and drag to meet various mission profile requirements including launch, cruise, and terminal engagement. Multiple wings in accordance with the invention, may be used in both vertical and horizontal planes to provide not only lift but side force. The system can be manufactured in a fixed extended wing position where prelaunch carriage is not constrained to preclude the wing extended configuration and eliminate the parts required for extension. The wing kit may be mounted under the weapons by straps, eliminating the need for lug attachments and swaybrace support. The lugs can be replaced by railguides for boosted rail or tube launch. Extension and retraction of the wings may be controlled via a remote communications link as well as or instead of in response to a timer.

## Claims

1. An extendable wing assembly (10) for a guided munition (12) comprising:
a housing;
a rear wing (22);
a forward wing (24) pivotably coupled to the rear wing (22) at an outer end thereof, an inner end of one (24) of the forward and rear wings (22, 24) being pivotably coupled to the housing;
a carriage assembly (26) arranged to be movable along an axis of the housing, an inner end of the other wing (22) being pivotably coupled to the carriage assembly (26), movement of the carriage assembly (26) along the axis causing the wings (22, 24) to move between a first position in which the wings (22, 24) are stowed and a second position in which the wings are deployed;
**characterised in that** the rear wing (22) lies on top of the forward wing (24) in the first position and **in that** the wings (22,24) are arranged to move pivotally forward between the first position and the second position in response to movement of the carriage assembly (26) along said axis.

2. An extendable wing assembly as claimed in claim 1, **characterised by** a motor (40) disposed within the housing, and coupling means (28, 36) arranged between the motor (40) and the carriage assembly (26) such that operation of the motor (40) causes movement of the carriage assembly (26) along the axis.

3. An extendable wing assembly as claimed in claim 2 **characterised in that** coupling means (26, 36) comprises a driveshaft (28) arranged to be driven by the motor (40)such that rotation of the motor (40) causes translation of the carriage assembly (26).

4. An extendable wing assembly as claimed in claim 3, **characterised in that** the coupling means (28, 36) further comprises a gear train (36) coupling the motor (40) to the driveshaft (28) .

5. An extendable wing assembly as claimed in any preceding claim, **characterised in that** the inner end of the rear wing (22) is pivotally coupled to the carriage assembly (26) .

6. An extendable wing assembly as claimed in claim 5, **characterised in that** the driveshaft (28) maintains deployment of the wings (22, 24) when the rotation of the wings (22, 24) is less than 90 degrees, and **in that** deployment is complete when the rear wing (22) passes 90 degrees of rotation.

7. An extendable wing assembly as claimed in claim 6, **characterised in that** the wings (22, 24) form a triangular planform which is locked into position above 90 degrees of rotation.

8. An extendable wing assembly as claimed in any preceding claim, **characterised by** two forward and rear wings (22, 24) and two carriage assemblies (26), each carriage assembly (26) being associated with a forward and a rear wing (22, 24) and located on one side of the housing.

9. An extendable wing assembly as claimed in any preceding claim comprising by a discrete unit arranged to be attached to a guided munition (12).

10. An extendable wing assembly as claimed in claim 9, **characterised in that** housing comprises a hardback (10) arranged to be secured to the munition (12) by lug wells (14) thereof.

11. An extendable wing assembly as claimed in claim 9 or 10, **characterised in that** means to accept mounting lugs (16a, 16b) for mounting the munition (12) on weapon suspension equipment.

12. An extendable wing assembly as claimed in claim 9, **characterised in that** the housing is arranged to be secured to the munition (12) by straps.

13. An extendable wing assembly as claimed in any preceding claim, **characterised by** means to deploy the wings (22, 24) after launch.

14. An extendable wing assembly as claimed in any preceding claim, **characterised by** means to adjust the configuration of the wings (22, 24) during flight.

## Patentansprüche

1. Ausfaltbarer Flügelaufbau (10) für Lenkwaffen (12) mit den folgenden Teilen:
- einem Gehäuse;
- einem hinteren Tragflügel (22);
- einem vorderen Tragflügel (24), der schwenkbar mit dem hinteren Tragflügel (22) an dessem äußeren Ende schwenkbar angelenkt ist, wobei ein inneres Ende eines Tragflügels (24) von vorderen bzw. hinteren Tragflügeln (22, 24) schwenkbar am Gehäuse angelenkt ist;
- ein Schlittenaufbau (26), der längs einer Achse des Gehäuses beweglich ist, wobei ein inneres Ende des anderen Tragflügels (22) schwenkbar am Schlittenaufbau (26) angelenkt ist, und die Bewegung des Schlittenaufbaus (26) längs der Achse die Tragflügels (22, 24) veranlaßt, sich zwischen einer ersten Stellung, in der die Tragflügel (22, 24) in Verstaustellung befindlich sind und einer zweiten Stellung zu bewegen, in der die Tragflügel entfaltet sind;
- **dadurch gekennzeichnet, daß** der hintere Tragflügel (22) in der ersten Stellung über dem vorderen Tragflügel (24) liegt, und daß die Tragflügel (22, 24) so ausgebildet sind, daß sie sich zwischen der ersten Stellung und der zweiten Stellung gemäß der Bewegung des Schlittenaufbaus (26) längs der Achse nach vorn verschwenken.

2. Ausfaltbarer Flügelaufbau nach Anspruch 1, **dadurch gekennzeichnet, daß** ein Motor (40) innerhalb des Gehäuses angeordnet ist und eine Kupplung (28, 36) zwischen dem Motor (40) und dem Schlittenaufbau (26) derart angeordnet ist, daß eine Drehung des Motors (40) eine Bewegung des Schlittenaufbaus (26) längs der Achse bewirkt.

3. Ausfaltbarer Flügelaufbau nach Anspruch 2, **dadurch gekennzeichnet, daß** die Kupplung (26, 36) eine Antriebswelle (28) aufweist, die vom Motor (40) derart angetrieben wird, daß eine Drehung des Motors (40) eine Verschiebung des Schlittenaufbaus (26) bewirkt.

4. Ausfaltbarer Flügelaufbau nach Anspruch 3, **dadurch gekennzeichnet, daß** die Kupplung (28, 36) außerdem ein Getriebe (36) aufweist, das den Motor (40) mit der Antriebswelle (28) bewegungsschlüssig verbindet.

5. Ausfaltbarer Flügelaufbau nach einem der vorhergehenden Ansprüche, **dadurch gekennzeichnet, daß** das innere Ende des hinteren Flügels (22) schwenkbar an dem Schlittenaufbau (26) angelenkt ist.

6. Ausfaltbarer Flügelaufbau nach Anspruch 5, **dadurch gekennzeichnet, daß** die Antriebswelle (28) die Entfaltung der Flügel (22, 24) aufrechterhält, wenn die Drehung der Flügel (22, 24) weniger als 90° beträgt, und daß die Entfaltung vollendet ist, wenn der hintere Flügel (22) die 90° Drehung durchläuft.

7. Ausfaltbarer Flügelaufbau nach Anspruch 6, **dadurch gekennzeichnet, daß** die Flügel (22, 24) eine dreieckige, ebene Form aufweisen, die in ihrer Lage verriegelt ist, nachdem die 90° Drehung überschritten ist.

8. Ausfaltbarer Flügelaufbau nach einem der vorhergehenden Ansprüche, **gekennzeichnet durch** zwei vordere und zwei hintere Flügel (22,24) und zwei Schlittenaufbauten (26), wobei jeder Schlittenaufbau (26) einem vorderen und einem hinteren Flügel (22, 24) zugeordnet ist und auf einer Seite des Gehäuses liegt.

9. Ausfaltbarer Flügelaufbau nach einem der vorhergehenden Ansprüche, welcher aus einer diskreten Einheit besteht, die an einer Lenkwaffe (12) festlegbar ist.

10. Ausfaltbarer Flügelaufbau nach Anspruch 9, **dadurch gekennzeichnet, daß** das Gehäuse einen Rücken (10) aufweist, der an der Lenkwaffe (12) über eine Aufhängung (14) befestigbar ist.

11. Ausfaltbarer Flügelaufbau nach Anspruch 9 oder 10, **dadurch gekennzeichnet, daß** Mittel vorgesehen sind, um die Lageransätze (16a, 16b) aufzunehmen, um die Lenkwaffe (12) an einer Lenkwaffen-Aufhängeinrichtung zu montieren.

12. Ausfaltbarer Flügelaufbau nach Anspruch 9, **dadurch gekennzeichnet, daß** das Gehäuse an der Lenkwaffe 12 durch Bügel festlegbar ist.

13. Ausfaltbarer Flügelaufbau nach einem der vorhergehenden Ansprüche, **gekennzeichnet, durch** Mittel, **durch** welche die Flügel (22, 24) nach dem Start entfaltet werden.

14. Ausfaltbarer Flügelaufbau nach einem der vorhergehenden Ansprüche, **gekennzeichnet durch** Mittel zur Einstellung der Konfiguration der Flügel (22, 24) während des Fluges.

## Revendications

1. Un assemblage d'ailes extensibles (10) pour une munition guidée (12) comportant :
un logement ;
une aile arrière (22) ;
une aile avant (24) couplée de façon à pouvoir pivoter à l'aile arrière (22) à une extrémité externe de celle-ci, une extrémité interne d'une ailes (24) parmi les ailes avant et arrière (22, 24) étant couplée de façon à pouvoir pivoter au logement ;
un assemblage d'affût (26) agencé pour être déplaçable le long d'un axe du logement, une extrémité interne de l'autre aile (22) étant couplée de façon à pouvoir pivoter à l'assemblage d'affût (26), le déplacement de l'assemblage d'affût (26) le long de l'axe amenant les ailes (22, 24) à se déplacer entre une première position dans laquelle les ailes (22, 24) sont rentrées et une deuxième position dans laquelle les ailes sont déployées ;
**caractérisé en ce que** l'aile arrière (22) se trouve au-dessus de l'aile avant (24) dans la première position et **en ce que** les ailes (22, 24) sont agencées pour se déplacer de façon pivotante vers l'avant entre la première position et la deuxième position en réponse au déplacement de l'assemblage d'affût (26) le long dudit axe.

2. Un assemblage d'ailes extensibles tel que revendiqué dans la revendication 1, **caractérisé par** un moteur (40) disposé au sein du logement, et des moyens de couplage (28, 36) agencés entre le moteur (40) et l'assemblage d'affût (26) de telle sorte que l'activation du moteur (40) amène l'assemblage d'affût (26) à se déplacer le long de l'axe.

3. Un assemblage d'ailes extensibles tel que revendiqué dans la revendication 2 **caractérisé en ce que** les moyens de couplage (26, 36) comportent un arbre d'entraînement (28) agencé pour être entraîné par le moteur (40) de telle sorte que la rotation du moteur (40) amène la translation de l'assemblage d'affût (26).

4. Un assemblage d'ailes extensibles tel que revendiqué dans la revendication 3, **caractérisé en ce que** les moyens de couplage (28, 36) comportent de plus un train d'engrenages (36) couplant le moteur (40) à l'arbre d'entraînement (28).

5. Un assemblage d'ailes extensibles tel que revendiqué dans n'importe quelle revendication précédente, **caractérisé en ce que** l'extrémité interne de l'aile arrière (22) est couplée de façon pivotante à l'assemblage d'affût (26).

6. Un assemblage d'ailes extensibles tel que revendiqué dans la revendication 5, **caractérisé en ce que** l'arbre d'entraînement (28) maintient les ailes (22, 24) déployées lorsque la rotation des ailes (22, 24) est inférieure à 90 degrés, et **en ce que** le déploiement est terminé lorsque l'aile arrière (22) dépasse 90 degrés de rotation.

7. Un assemblage d'ailes extensibles tel que revendiqué dans la revendication 6, **caractérisé en ce que** les ailes (22, 24) forment une forme en plan triangulaire, laquelle est bloquée en position au-delà de 90 degrés de rotation.

8. Un assemblage d'ailes extensibles tel que revendiqué dans n'importe quelle revendication précédente, **caractérisé par** deux ailes avant et arrière (22, 24) et deux assemblages d'affût (26), chaque assemblage d'affût (26) étant associé à une aile avant et une aile arrière (22, 24) et situé sur un côté du logement.

9. Un assemblage d'ailes extensibles tel que revendiqué dans n'importe quelle revendication précédente, comprenant une unité discrète agencée pour être attachée à une munition guidée (12).

10. Un assemblage d'ailes extensibles tel que revendiqué dans la revendication 9, **caractérisé en ce que** le logement comporte une base dure de dos (10) agencée pour être assujettie à la munition (12) par des puits pour pattes (14) de celui-ci.

11. Un assemblage d'ailes extensibles tel que revendiqué dans la revendication 9 ou la revendication 10, **caractérisé par** des moyens pour accueillir des pattes de montages (16a, 16b) pour monter la munition (12) sur l'équipement de suspension d'arme.

12. Un assemblage d'ailes extensibles tel que revendiqué dans la revendication 9, **caractérisé en ce que** le logement est agencé pour être assujetti à la munition (12) par des sangles.

13. Un assemblage d'ailes extensibles tel que revendiqué dans n'importe quelle revendication précédente, **caractérisé par** un moyen pour déployer les ailes (22, 24) après le lancement.

14. Un assemblage d'ailes extensibles tel que revendiqué dans n'importe quelle revendication précédente, **caractérisé par** un moyen pour ajuster la configuration des ailes (22, 24) durant le vol.
